# EUROPÄISCHE PATENTSCHRIFT

(11) **EP 1 288 037 B1**
(45) Veröffentlichungstag und Bekanntmachung des Hinweises auf die Patenterteilung: **24.10.2007**
(21) Anmeldenummer: 02014197.4
(22) Anmeldetag: 26.06.2002
(51) Int. Cl.: B60J 1/18

(54) **Scheibenanordnung für ein Fahrzeug**
Window arrangement for a vehicle
Dispositif pour fenêtre de véhicule

(30) Priorität: 25.08.2001 DE 10141788
(43) Veröffentlichungstag der Anmeldung: 05.03.2003
(73) Patentinhaber: Dr.Ing. h.c. F. Porsche Aktiengesellschaft, 70435 Stuttgart (DE)
(72) Erfinder: Pfertner, Kurt, 71254 Ditzingen (DE); Armbruster, Reiner, 75417 Mühlacker (DE)

(56) Entgegenhaltungen:
- DE-A- 3 501 916
- DE-A- 4 129 492
- DE-A- 19 912 105
- GB-A- 2 152 124

## Beschreibung

Die Erfindung bezieht sich auf eine Scheibenanordnung für ein Fahrzeug, gemäß Oberbegriff des Anspruchs 1.

Eine gattungsgemäße Scheibenanordnung für ein Fahrzeug geht aus der GB 2152124 A und der DE 199 12 105 A1 hervor und umfasst eine Sichtscheibe und einen an der Innenseite der Scheibe angeordneten Scheibenträgerrahmen, wobei die Scheibeninnenseite dem Fahrzeuginnenraum zugewandt ist. Ferner besitzt die Scheibenanordnung eine den Scheibenrand umgreifende Abschlussleiste, die einen Befestigungsfortsatz aufweist, mit dem sie an dem Scheibenträgerrahmen gehalten ist.

Aufgabe der Erfindung ist es, bei einer Scheibenanordnung der eingangs genannten Art eine einfache Befestigung der Abschlussleiste zu schaffen.

Gelöst wird diese Aufgabe mit einer Scheibenanordnung mit den in Anspruch 1 genannten Merkmalen. Weitere, die Erfindung ausgestaltende Merkmale sind in den Unteransprüchen angegeben.

Die mit der Erfindung hauptsächlich erzielten Vorteile sind darin zu sehen, dass durch die Befestigung der Abschlussleiste mit dem Klemmelement eine schnelle und einfache sowie kostengünstige Montage der Scheibenanordnung gegeben ist. Ferner bietet die erfindungsgemäße Klemmbefestigung in vorteilhafter Weise eine Einstellmöglichkeit der Abschlussleiste relativ zum Rand der Sichtscheibe, wodurch weiterhin das gewünschte Spaltmaß zwischen Abschlussleiste und dem die Scheibe umgebenden Karosseriebereich abgestimmt wird.

Mit den in Anspruch 3 angegebenen Merkmalen ist in vorteilhafter Weise die Einstellmöglichkeit der Abschlussleiste relativ zur Sichtscheibe in einem großen Bereich möglich, wodurch entsprechende Toleranzen ausgleichbar sind.

Besonders einfache Klemmvarianten für den Befestigungsfortsatz in der Aufnahmeausnehmung ergeben sich aus den Ansprüchen 4 und 5.

Mit der vorstehend erwähnten Einstellmöglichkeit der Abschlussleiste zum Rand der Sichtscheibe wird nach einer Weiterbildung mit den in Anspruch 6 genannten Merkmalen ein definierter Abschluss der Dichtlippe mit dem die Scheibenanordnung umgebenden Karosseriebereich erreicht.

Ein besonders bevorzugtes Ausführungsbeispiel der Scheibenanordnung zeichnet sich durch eine Fixiereinrichtung aus, die in Anspruch 7 angegeben ist. Mit der Fixiereinrichtung wird das Klemmelement sicher und dauerhaft in der Aufnahmeausnehmung gehalten. Eine sichere Befestigung der Abschlussleiste ist somit gegeben. Vorzugsweise wird die Fixiereinrichtung durch ein Klebe- und/oder Filzband gebildet. Ggf. könnte das Klemmelement in der Aufnahmeausnehmung auch mit einem aushärtenden flüssigen Klebstoff oder dgl. fixiert werden.

Die Erfindung wird nachfolgend anhand von Ausführungsbeispielen mit Bezug auf die Zeichnung näher erläutert.

Es zeigen:
- Fig. 1: in perspektivischer Ansicht ein Fahrzeug mit einer Scheibenanordnung und
- Fig. 2: ein Teilschnitt durch die Scheibenanordnung entlang der Linie II - II in Fig. 1.

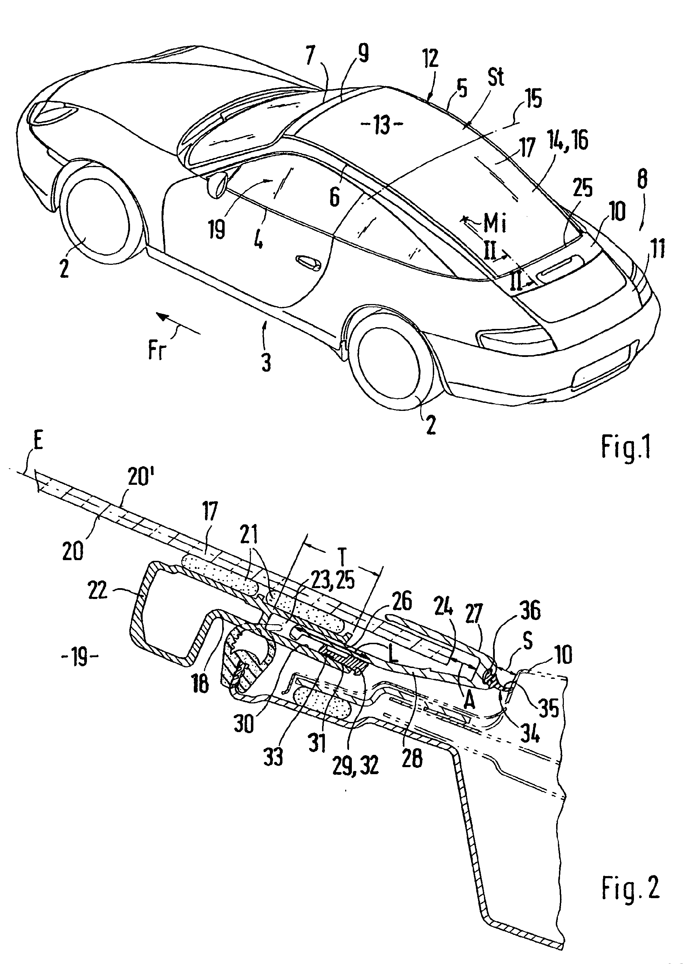

Die Fig. 1 zeigt ein Fahrzeug 1, insbesondere einen Personenkraftwagen, mit einem von Rädern 2 getragenen Aufbau 3, der oberhalb einer Gürtellinie 4 bogenförmig verlaufende Dachlängsholme 5 und 6 besitzt, die von Eckbereichen eines Windschutzscheibenrahmens 7 ausgehen und sich bis in den Heckbereich 8 des Fahrzeugs 1 erstrecken, so dass das Fahrzeug die Form eines Coupé mit Fließheck besitzt. Eine Dachöffnung 9 wird begrenzt von einem Querholm des Windschutzscheibenrahmens 7, den Dachlängsholmen 5 und 6 und von einem im Heckbereich 8 angeordneten Karosserieelement 10, welches zwischen einer Motorabdeckung 11 und dem heckseitigen Bereich der Gürtellinie 4 liegt. In der Dachöffnung 9 ist eine Dachanordnung 12 vorgesehen, die vorzugsweise als ein in die Dachöffnung einsetzbares Dachmodul ausgebildet ist und zumindest einen die Dachöffnung 9 verschließenden und wenigstens teilweise freigebenden vorderen Deckel 13 und beispielsweise ein Heckteil 14 umfasst. Der Deckel 13 ist aus seiner Schließstellung St absenkbar und kann anschließend unter das Heckteil 14 verschoben werden. Vorzugsweise ist das Heckteil 14 entgegen der Fahrtrichtung Fr nach Art einer Klappe um eine hier lediglich angedeutete Schwenkachse 15 zu öffnen.

Das Heckteil 14 umfasst eine Scheibenanordnung 16, die eine transparente Sichtscheibe 17 und einen die Sichtscheibe 17 tragenden Scheibenträgerrahmen 18 aufweist, wie dies Fig. 2 zeigt. Der Scheibenträgerrahmen 18 ist an der dem Fahrzeuginnenraum 19 zugewandten Scheibeninnenseite 20 befestigt. Hierfür ist vorzugsweise wenigstens eine Klebelinie 21 vorgesehen. Der Scheibenträgerrahmen 18 kann insbesondere im Scheibenrandbereich an der Innenseite 20 umlaufen und beispielsweise durch ein Hohlprofil 22 gebildet sein, das zumindest eine Profilkammer 23 besitzt, die in Richtung zum heckseitigen Scheibenrand 24 hin offen ausgebildet ist. Der Trägerrahmen 18 umfasst eine Aufnahmeausnehmung 25, die vorzugsweise von der offenen Profilkammer 23 gebildet ist. Die Aufnahmeausnehmung 25 nimmt einen Befestigungsfortsatz 26 einer Abschlussleiste 27 auf, die im Wesentlichen einen U - förmigen Querschnitt besitzt und so über den Scheibenrand 24 geschoben werden kann, also die Scheibeninnenseite 20 und die Scheibenaußenseite 20' bereichsweise übergreift. Von dem benachbart zur Scheibeninnenseite 20 liegenden Schenkel 28 des U - Profils der Abschlussleiste 27 geht der Befestigungsfortsatz 26, vorzugsweise einstückig, aus. Um den Befestigungsfortsatz 26 und somit auch die Abschlussleiste 27 an der Sichtscheibe 17 zu halten, ist in die Aufnahmeausnehmung 25 ein Klemmelement 29 eingesetzt, welches den Befestigungsfortsatz 26 innerhalb der Aufnahmeausnehmung 25 klemmend hält.

Für die Klemmung kann an der Innenwand 30 der Aufnahmeausnehmung 25 eine schiefe Ebene 31 als Klemmschräge vorgesehen sein, die mit dem Klemmelement 29 zusammenwirkt. Zusätzlich oder alternativ kann das Klemmelement 29 als Klemmkeil 32 realisiert sein. Für das Halten des Klemmelements 29 in der Aufnahmeausnehmung 25 kann außerdem eine Fixiereinrichtung vorgesehen sein, die beispielsweise durch ein Klebe- und/oder Filzband 33 gebildet wird, welches an der Innenwand 30 und/oder am Klemmelement 29 angeordnet ist. Entlang des Scheibenrandes 24 können mehrere Klemmelemente 29 vorgesehen sein, um die Abschlussleiste 27 an mehreren Stellen am Scheibenträgerrahmen 18 zu fixieren.

Die Aufnahmeausnehmung 25 erstreckt sich in ihrer Tiefe T etwa parallel zur Ebene E der Sichtscheibe 17, wobei die in Richtung zur Scheibenmitte Mi gemessene Tiefe T der Aufnahmeausnehmung 25 etwa der Länge L des Befestigungsfortsatzes 26 entspricht. Vorteilhaft hierbei ist, dass die Abschlussleiste 27 hinsichtlich ihres Abstandes A zum Scheibenrand 24 eingestellt werden kann, so dass ein zwischen der Abschlussleiste 27 und dem Karosseriebereich 10 vorliegender Spalt 34 auf ein gewünschtes Spaltmaß S einstellbar ist, je nach dem wie tief der Befestigungsfortsatz 26 in die Aufnahmeausnehmung 25 eingeschoben wird. Ist das gewünschte Spaltmaß S erreicht, wird das Klemmelement 29 in die Ausnehmung 25 eingesetzt. Außerdem kann an der Abschlussleiste 27 zur Überbrückung des Spaltes 34 eine Dichtlippe 35 an der Abschlussleiste 27 befestigt sein. Für die Befestigung der Dichtlippe 35 ist eine schwalbenschwanzartige Ausnehmung 36 an der Abschlussleiste 27 vorgesehen, in die eine entsprechende Hintergriffskontur 37 der Dichtlippe 35 eingreift.

## Patentansprüche

1. Scheibenanordnung für ein Fahrzeug, mit einer Sichtscheibe (17) und einem Scheibenträgerrahmen (18) der an der einem Fahrzeuginnenraum zugewandten Scheibeninnenseite (20) befestigt ist, wobei die Scheibenanordnung ferner eine Abschlussleiste (27) für den Scheibenrand (24) besitzt, welche Abschlussleiste (27) mit einem Befestigungsfortsatz (26) an dem Scheibenträgerrahmen (18) festgelegt ist, **dadurch gekennzeichnet, dass** der Scheibenträgerrahmen (18) eine Aufnahmeausnehmung (25) für den Befestigungsfortsatz (26) der Abschlussleiste (27) aufweist und dass der Befestigungsfortsatz (26) mit wenigstens einem Klemmelement (29) in der Aufnahmeausnehmung (25) gehalten ist.

2. Scheibenanordnung nach Anspruch 1, **dadurch gekennzeichnet, dass** sich die Aufnahmeausnehmung (25) in ihrer Tiefe (T) etwa parallel zur Sichtscheibenebene (E) erstreckt.

3. Scheibenanordnung nach Anspruch 1 oder 2, **dadurch gekennzeichnet, dass** die Tiefe (T) der Aufnahmeausnehmung (25) etwa der Länge (L) des Befestigungsfortsatzes (26) entspricht.

4. Scheibenanordnung nach Anspruch 1, **dadurch gekennzeichnet, dass** das Klemmelement (29) ein Klemmkeil (32) ist.

5. Scheibenanordnung nach Anspruch 1, **dadurch gekennzeichnet, dass** die Aufnahmeausnehmung (25) eine schiefe Ebene (31) als Klemmschräge besitzt.

6. Scheibenanordnung nach einem der vorhergehenden Ansprüche, **dadurch gekennzeichnet, dass** an der Abschlussleiste (27) eine Dichtlippe (35) angebracht ist, die mit dem Randbereich des die Scheibenanordnung (16) umgebenden Karosseriebereichs (10) des Fahrzeugs (1) zusammenwirkt.

7. Scheibenanordnung nach einem der vorhergehenden Ansprüche, **dadurch gekennzeichnet, dass** in der Aufnahmenausnehmung (25) und/oder an dem Klemmelement (29) und/oder an dem Befestigungsfortsatz (26) eine Fixiereinrichtung für das Klemmelement (29) angeordnet ist.

8. Scheibenanordnung nach Anspruch 7, **dadurch gekennzeichnet, dass** die Fixiereinrichtung ein Klebe und/oder Filzband (33) ist.

## Claims

1. A window arrangement for a vehicle, with a window pane (17) and a window mounting frame (18) which is fastened to the pane inner surface (20) facing a vehicle interior, wherein the window arrangement also has an end strip (27) for the pane edge (24), which end strip (27) is secured to the window mounting frame (18) by a fastening extension (26), **characterised in that** the window mounting frame (18) has a receiving recess (25) for the fastening extension (26) of the end strip (27) and **in that** the fastening extension (26) is held in the receiving recess (25) by at least one clamping member (29).

2. A window arrangement according to claim 1, **characterised in that** the depth (T) of the receiving recess (25) extends approximately parallel to the plane (E) of the window pane.

3. A window arrangement according to claim 1 or 2, **characterised in that** the depth (T) of the receiving recess (25) corresponds approximately to the length (L) of the fastening extension (26).

4. A window arrangement according to claim 1, **characterised in that** the clamping member (29) is a clamping wedge (32).

5. A window arrangement according to claim 1, **characterised in that** the receiving recess (25) has an oblique plane (31) acting as a clamping chamfer.

6. A window arrangement according to any one of the preceding claims, **characterised in that** a sealing lip (35) is attached to the end strip (27) and co-operates with the edge region of the body portion (10) of the vehicle (1), said body portion (10) surrounding the window arrangement (16).

7. A window arrangement according to any one of the preceding claims, **characterised in that** a fixing means for the clamping member (29) is arranged in the receiving recess (25) and/or on the clamping member (29) and/or on the fastening extension (26).

8. A window arrangement according to claim 7, **characterised in that** the fixing means is an adhesive and/or felt strip (33).

## Revendications

1. Système de fenêtre pour un véhicule automobile, comportant une vitre (17) et un cadre support (18) qui est fixé contre le côté intérieur (20) de la vitre, orienté vers l'habitacle du véhicule, le système de fenêtre comportant en outre un rebord de recouvrement (27) pour le bord de vitre (24), lequel rebord de recouvrement (27) est fixé avec une queue de fixation (26) contre le cadre support (18), **caractérisé en ce que** le cadre support (18) comporte un évidement (25) destiné à recevoir la queue de fixation (26) du rebord de recouvrement (27) et **en ce que** la queue de fixation (26) est maintenue avec au moins un élément de serrage (29) dans l'évidement (25).

2. Système de fenêtre selon la revendication 1, **caractérisé en ce que** l'évidement (25) s'étend avec sa profondeur (T) sensiblement parallèlement au plan (E) de la vitre.

3. Système de fenêtre selon la revendication 1 ou 2, **caractérisé en ce que** la profondeur (T) de l'évidement (25) correspond à peu près à la longueur (L) de la queue de fixation (26).

4. Système de fenêtre selon la revendication 1, **caractérisé en ce que** l'élément de serrage (29) est une clavette de serrage (32).

5. Système de fenêtre selon la revendication 1, **caractérisé en ce que** l'évidement (25) comporte un plan incliné (31) formant une rampe de blocage.

6. Système de fenêtre selon l'une quelconque des revendications précédentes, **caractérisé en ce qu'**une lèvre d'étanchéité (35) est posée sur le rebord de recouvrement (27) et coopère avec le bord de la zone de carrosserie (10) du véhicule (1), entourant le système de fenêtre (16).

7. Système de fenêtre selon l'une quelconque des revendications précédentes, **caractérisé en ce qu'**un dispositif de blocage pour l'élément de serrage (29) est agencé dans l'évidement (25) et/ou contre l'élément de serrage (29) et/ou contre la queue de fixation (26).

8. Système de fenêtre selon la revendication 7, **caractérisée en ce que** le dispositif de blocage est une bande adhésive et/ou une bande de feutre (33).
